# EUROPÄISCHE PATENTSCHRIFT

(11) **EP 0 559 060 B1**
(45) Veröffentlichungstag und Bekanntmachung des Hinweises auf die Patenterteilung: **24.04.1996**
(21) Anmeldenummer: 93102828.6
(22) Anmeldetag: 24.02.1993
(51) Int. Cl.: C01B 33/20

(54) **Clathrasil vom Strukturtyp Dodekasil 1 H mit kleiner mittlerer Kristallgrösse**
Structure type Dodekasil 1 H chathrasil with small average crystal size
Cathrasil de type de structure Dodecasil 1 H de cristaux de petite taille moyenne

(30) Priorität: 02.03.1992 DE 4206553
(43) Veröffentlichungstag der Anmeldung: 08.09.1993
(73) Patentinhaber: MERCK PATENT GmbH, D-64271 Darmstadt (DE)
(72) Erfinder: Grebner, Michael, W-6500 Mainz (DE); Reich, Axel, W-6509 Schornsheim (DE); Schüth, Ferdi, Dr., W-6500 Mainz (DE); Unger, Klaus, Prof. Dr., W-6104 Seeheim-Jugenheim (DE)

(56) Entgegenhaltungen:
- DE-A- 2 935 123
- ZEOLITES, Band 12, Jänner 1992; GIES et al., Seiten 42-49

## Beschreibung

Die Erfindung betrifft ein Clathrasil vom Strukturtyp Dodekasil 1 H mit kleiner mittlerer Teilchengröße und plättchenförmige Pigmente auf der Basis derartiger Teilchen sowie entsprechende Herstellungsverfahren.

Clathrasile gehören zur Klasse der porösen Tektosilikate oder Porosile, welche nach H. Gies und B. Marler, Zeolites, 12 (1992), 42 durch die allgemeine Formel 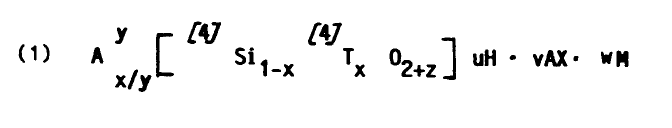
beschrieben werden können, worin A ein Kation mit der Ladung y, T ein trivalentes Kation, welches tetrahedral durch 4 O-Atome koordiniert ist, z die Anzahl zusäzlicher O-Atome zur Kompensation von Gitterunterbrechungen, AX Ionenpaare und M Gastpartikel sind und u, v und w 0, 1, 2, ... bedeuten. Als Kationen A kommen z.B. Alkali- oder Erdalkaliionen in Frage, T kann z.B. ein Aluminium- oder Borkation sein, und für X kommt eine Vielzahl von Anionen wie z.B. OH, Halogen etc. in Frage. Die Gastpartikel, welche auch als Template bezeichnet werden, werden in die Hohlräume der Porosilstruktur eingelagert und beeinflussen daher bei der Synthese der Porosile ganz wesentlich deren Struktur. Bei den Gastpartikeln handelt es sich i.a. um neutrale Moleküle, aber insbesondere bei geladenenen Porosilstrukturen können manchmal auch geladene Gastpartikel eingelagert werden. In diesem Fall muß die obige Formel (1) entsprechend abgeändert werden.

Nach der Größe und Form der Hohlräume werden Porosile in Clathrasile und Zeosile unterteilt. Während Zeosile käfig- oder kanalartige Poren aufweisen, die so groß sind, daß die Templatmoleküle unter relativ milden Bedingungen aus den Poren vertrieben und ggf. gegen andere Gastmoleküle ausgetauscht werden, weisen Clathrasile sehr kleine käfigartige Hohlräume auf, deren Öffnungen zu klein sind, als daß ein eingeschlossenes Molekül das Porensystem verlassen könnte. Von besonderem Interesse sind Clathrasile vom Typ Dodecasil 1 H, welche eine plättchenförmige, sechseckige Struktur aufweisen.

Die bisherige Herstellung der Clathrasile erfolgt durch hydrothermale Kristallisation bei z.B. 200 °C aus einer silikathaltigen Lösung, welcher Templatmoleküle wie z.B. Adamantylamin zugesetzt werden. Bei diesem Herstellungsverfahren entstehen jedoch Kristalle mit einer mittleren Größe von typischerweis 150-500 µm. Derartig große Kristalle sind jedoch nicht zur Einarbeitung in Lackformulierungen, Coatings etc. geeignet und sie sind darüberhinaus überaus bruchempfindlich. Darüberhinaus werden in den herkömmlichen Syntheseverfahren üblicherweise solche Templatmoleküle im überschuß eingesetzt deren Abmessungen möglichst genau den Hohlraumabmessungen im Dodekasil 1 H entsprechen; als Beispiele seien etwa genannt: 1-Adamantylamin, Piperidin oder Azabicyclononaniumiodid. Die aufgezählten Materialien sind jedoch relativ teuer und für eine wirtschaftliche, großtechnische Pigmentherstellung ungeeignet.

Es bestand daher ein Bedürfnis nach Clathrasilen vom Strukturtyp Dodekasil 1 H mit kleiner mittlerer Kristallgröße von weniger als etwa 20 µm sowie nach einem entsprechenden wirtschaftlichen und großtechnisch geeignetem Herstellungsverfahren.

Der vorliegenden Erfindung lag die Aufgabe zugrunde, Clathrasile vom Strukturtyp 1 H und ein Verfahren zu ihrer Herstellung bereit zu stellen, welche die angegebenen Anforderungen jedenfalls besser erfüllen als herkömmliche Clathrasile vom Strukturtyp Dodekasil 1 H sowie herkömmliche Herstellungsverfahren. Weitere Aufgaben der vorliegenden Erfindung entnimmt der Fachmann der nachfolgenden detaillierten Beschreibung.

Es wurde gefunden, daß diese Aufgaben durch die Bereitstellung des erfindungsgemäßen Verfahrens sowie der erfindungsgemäßen Dodekasil 1 H-Clathrasile gelöst werden können.

Gegenstand der Erfindung ist somit ein Verfahren zur Herstellung von kristallinem Clathrasil vom Strukturtyp Dodekasil 1 H mit einer mittleren Kristallgröße von nicht mehr als 20 µm. dadurch gekennzeichnet, daß ein alkalisch-wäßriges silikathaltiges Medium, enthaltend Kristallisationskeime und Templatmoleküle getempert wird, wobei der auf den SiO₂-Gehalt des Mediums bezogene Gehalt an Kristallisationskeimen nicht kleiner ist als 1 Gew%.

Gegenstand der Erfindung sind weiterhin Dodekasil 1-Clathrasile mit einer mittleren Kristallgröße von nicht mehr als 20 µm sowie plättchenförmige Pigmente auf der Basis derartiger Dodekasil 1 H-Clathrasile.

Bei dem erfindungsgemäßen Verfahren werden dem Reaktionsansatz, welcher auf einem alkalisch-wäßrigen silikathaltigen Medium basiert, ein oder mehrere Template und Kristallisationskeime zugesetzt.

Als Kristallisationskeime werden insbesondere kleingemahlene Dodekasil 1 H-Clathrasilkristalle verwendet, welche z.B. nach herkömmlichen Herstellungsverfahren erhalten wurden und ggf. bereits Template enthalten. Das Mahlen der Dodekasil 1 H-Clathrasilkristalle kann z.B. in einer Schwingmühle erfolgen, und die mittlere Partikelgröße der erhaltenen Kristallisationskeime beträgt typischerweise zwischen 0.2 und 1.5 µm und insbesondere etwa 1 µm.

Es wurde nun gefunden, daß durch die Zugesetzte Menge an Impfkristall-oder Kristallisationskeimen die Größe der erhaltenenen Dodekasil 1 H-Clathrasilkristalle gezielt beeinflußt werden kann. Während man mit relativ kleinen Impfkristallmengen etwa zwischen 1 und 10 Gew.% und insbesondere 5 und 10 Gew.% Dodekasil 1 H-Clathrasilkristalle mit einer mittleren Teilchengröße zwischen 5 und 15 µm erhält, werden bei höheren Impfkristallkonzentrationen von mehr als 10 Gew.% und insbesondere zwischen 10 und 20 Gew.% kleinere Kristalle mit einer mittleren Teilchengröße von typischerweise weniger als 5 µm erhalten.

Bei diesen Dodekasil 1 H-Clathrasilkristallen handelt es sich um sechseckige Plättchen mit einer mittleren Dicke zwischen typischerweise 0.2 und 2 µm; das als Aspect Ratio bezeichnete Verhältnis aus lateraler Ausdehnung und Dicke dieser Dodekasil 1 H-Clathrasilkristalle beträgt damit typischerweise zwischen 1 und 100 und insbesondere zwischen 10 und 100.

Dem Reaktionsansatz werden weiterhin Templatmoleküle zugesetzt, wobei der auf die SiO₂-Molzahl bezogene Templatgehalt des Reaktionsansatzes typischerweise zwischen 0.03 und 2 und insbesondere zwischen 0.05 und 1.5 liegt. Wird der Templatgehalt niedriger als 3 Mol% gewählt, werden vielfach sehr stark verwachsene Dodekasil 1 H-Clathrasilkristalle erhalten, die vielfach auch durch Aufmahlen nicht getrennt werden können, ohne daß die Dodekasil 1 H-Plättchen zerstört werden; diese sehr stark verwachsenen Dodekasil 1 H-Clathrasile sind daher i.a. zur Pigmentherstellung ungeeignet. Der Templatgehalt wird besonders bevorzugt höher als 10 Mol%, bezogen auf die SiO₂-Molzahl des Reaktionsansatzes, gewählt.

Eine Erhöhung der Templatkonzentrationen auf mehr als 100 Mol% bewirkt in der Regel keine Verbesserung der Morphologie der Dodekasil 1 H-Clathrasilplättchen mehr und wird daher in der Regel schon aus wirtschaftlichen Gründen unterbleiben.

Überraschenderweise wurde gefunden, daß im Unterschied zur herkömmlichen Dodekasil 1 H-Clathrasilsynthese die Wahl der Template wesentlich weniger kritisch ist. So können als Template z.B. einfache Amine wie z.B. Hexamethylendiamin, einfache quartäre Ammoniumverbindungen wie z.B. Triethylmethylammoniumbromid, Tenside wie z.B. Natrium-Dodecylsulfat und weiter auch einfache Alkohole verwendet werden. Diese Aufzählung soll die Erfindung lediglich erläutern und keineswegs begrenzen; es kommen noch eine Vielzahl weiterer Moleküle als Templatmoleküle in Betracht. Entscheidend ist, daß bei dem erfindungsgemäßen Herstellungsverfahren die Anforderungen an die Geometrie der Templatmoleküle wesentlich geringer ist als bei herkömmlichen Verfahren. Bei dem erfindungsgemäßen Verfahren wird die Dodekasil 1 H-Clathrasilstruktur offenbar im wesentlichen durch die Impfkristalle induziert, wobei die Templatmoleküle unterstützend wirken. Demgegenüber wird die Struktur bei den herkömmlichen Synthesen einzig durch die Templatmoleküle induziert und gesteuert, und es ist verständlich, daß das Templatmolekül die gewünschte geometrische Struktur möglichst genau vorgeben muß.

Bei Verwendung geometrisch nicht genau passender Template wird zwar manchmal beobachtet, daß die erhaltenenen Dodekasil 1 H-Plättchen verwachsen sind. Diese Abweichungen von einer perfekten Morpholgie sind jedoch in der Regel nur relativ gering, und die erhaltenenen Reaktionsprodukte können i.a. durch Ultraschallbehandlung ohne Zerstörung der Dodekasil 1 H-Plättchen aufbereitet werden.

Die Verwendung von Kristallisationskeimen zur Synthese von Zeolithen ist zwar bekannt (s. z.B. DE 29 35 123), jedoch ist die Synthese von Dodekasil 1 H-Clathrasilen unter Zusatz von Kristallisationskeimen im Stand der Technik nicht beschrieben und es ist insbesondere bisher nicht erkannt worden,
* daß durch die Variation der Konzentration der zugesetzten Kristallisationskeime die mittlere Größe der erhaltenen Dodekasil 1 H-Clathrasilkristalle gezielt beeinflußt werden kann und
* daß durch den Zusatz von Kristallisationskeimen die Wahl der Templatmoleküle wesentlich unkritischer wird.

Durch den zuletzt aufgeführten Punkt wird eine großtechnische und wirtschaftliche Synthese von Dodekasil 1 H-Clathrasilkristallen überhaupt erst möglich.

Das alkalisch-wäßrige Medium weist typischerweise einen NH₃-Gehalt von 15 bis 45 Mol, der bei vollständiger Dissoziation der Base dem gleichen OH-Gehalt entspricht und einen H₂O-Gehalt von 40-70 Mol, bezogen auf die SiO₂-Molzahl des Mediums auf. Zur Einstellung des erforderlichen OH-Gehaltes bzw. des entsprechenden pH-Wertes wird eine Base, üblicherweise NH₃ zugesetzt; der pH-Wert des alkalisch-wäßrigen Mediums beträgt vorzugsweise zwischen 12 und 13. Die angegebenen Bereiche für OH-Gehalt, H₂O-Gehalt und pH sind i.a. bevorzugt, wobei allerdings auch Abweichungen von diesen Bereichen nach oben und nach unten möglich sind.

Als Silikatquelle kann insbesondere Kieselsäure verwendet werden, aber auch wäßrige Lösungen von Alkalisilikaten oder Alumosilikaten oder auch weitere Silikatquellen sind möglich.

Das vorstehend näher charakterisierte alkalisch-wäßrige silikathaltige Medium wird anschließend einer Temperbehandlung unterworfen, wodurch die Clathrasilkristalle erhalten werden. Die Aufheizgeschwindigkeit beträgt vorzugsweise zwischen 0.05 und 50 K/min und insbesondere zwischen 0.1 und 20 K/min, und die Endtemperatur wird vorzugsweise zwischen 400 und 470 K und insbesondere zwischen 423 und 453 K gewählt. Dabei kann die Temperatur sowohl mehr oder weniger linear hochgefahren werden, oder aber es können auch kompliziertere Temperaturprogramme, bei denen die Temperatur während des Aufheizens z.B. eine Zeitlang auf einem oder mehreren Zwischenwerten konstant gehalten wird, ehe sie dann weiter hochgefahren wird, oder auch weitere Temperaturprogramme benutzt werden.

Die Auswahl eines geeigneten Temperaturprogramms orientiert sich an der Vorstellung, daß sich die Clathrasil-Synthese grob in 2 Phasen unterteilen läßt, nämlich die Keimbildung als erste Phase und die Anlagerung von Monomeren an eine zum Wachstum befähigte Spezies als 2. Phase. So sind bei Verwendung einer kleinen oder relativ kleinen Impfkristallkonzentration häufig eine relativ niedrige Aufheizgeschwindigkeit und die Verwendung von Temperaturrampen bevorzugt, während bei höheren Impfkristall-Konzentrationen häufig schneller geheizt werden kann. Weiterhin werden bei niedrigen Aufheizgeschwindigkeiten vielfach Dodekasil 1 H-Clathrasilkristalle von besonders perfekter Morphologie erhalten.

Die Anpassung von Aufheizgeschwindigkeit und Aufheizprogramm an die jeweils verwendete Zusammensetzung des alkalisch-wäßrigen silkathaltigen Mediums und die Optimierung im Hinblick auf die gewünschte Kristallmorphologie und Ausbeute kann der Fachmann leicht und ohne jedes erfinderische Zutun durchführen. Die Gesamttemperdauer beträgt vorzugsweise zwischen 3 und 10 Tagen, wobei das Medium bei der Endtemperatur vorzugsweise zwischen 3 und 10 Tagen gehalten wird.

Die nach dem erfindungsgemäßen Verfahren hergestellten plättchenförmigen Dodekasil 1 H-Clathrasilkristalle können zur Herstellung plättchenförmiger Effektpigmente verwendet werden. Dazu werden die Kristallplättchen in eins wäßrigen Medium suspendiert und naßchemisch mit einer oder mehreren kompakten glatten Schichten hochbrechender Metalloxide wie z.B. TiO₂, ZrO₂, ZnO, Eisenoxid, Chromoxid nach Verfahren beschichtet, wie sie z.B. in den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 aufgeführt sind. Die Hohlraumöffnungen der Dodekasil 1 H-Struktur betragen 0.28 nm oder weniger und sind damit so klein, daß sie von den abgeschiedenen Metallhydroxiden bzw. Metalloxyhydroxiden praktisch nicht wahrgenommen werden. Wegen des deutlich niedrigeren Aspect Ratios derartiger Pigmente im Vergleich etwa zu Mica-Pigmenten ist bei den erfindungsgemäßen Pigmenten der Perlglanzeffekt weniger stark ausgeprägt, und die erfindungsgemäßen Pigmente können treffender als schimmernde Absorptionspigmente bezeichnet werden.

Es wurde weiter gefunden, daß die Dodekasil 1 H-Clathrasilkristalle hervorragend als Träger organischer Farbmittel geeignet sind. Dazu werden dem Reaktionsansatz organische Farbmittel wie z.B. Methylenblau, Methylorange, Bromkresolpurpur, Malachitgrün oder Phenol rot zugesetzt, wobei diese Aufzählung die Erfindung lediglich erläutern und keinesfalls begrenzen soll. Die Farbmittelmoleküle dürfen lediglich nicht so groß gewählt werden, daß sie in die Hohlräume des Dodekasil 1 H-Clathrasils nicht mehr hineinpassen. Im Dodekasil 1 H existieren zwei Arten von Hohlräumen mit einer Hohlraumöffnung von 0.28 nm, nämlich Ikosaeder und Dodekaeder-Käfige, welche einen inneren Durchmesser von 1.12 nm aufweisen. Daneben gibt es noch eine andere Art von Dodekaeder-Käfigen mit einer noch kleineren, aus einem SiO-Fünfring bestehenden Hohlraumöffnung, welche einen inneren Durchmesser von 0.57 nm aufweisen. Der Fachmann kann aufgrund der angegebenen Käfiggeometrie leicht organische Farbmittel auswählen können, die eingelagert werden können.

Die Farbmittelmoleküle werden bei der Synthese insbesondere in die zuerst genannten Ikosaeder- und Dodekaeder-Hohlräume mit einer Hohlraumöffnung von 0.28 nm eingelagert; die kleineren Dodekaeder-Käfige bleiben dagegen vielfach unbesetzt. Durch die engen Hohraumöffnungen von nur 0.28 nm ist sichergestellt, daß die Farbmittelmoleküle praktisch nicht aus den Hohlräumen herausgelangen können, sodaß die resultierenden Einschlußpigmente außerordentlich farbecht und nichtblutend sind. Sie sind darüberhinaus auch außer ordentlich stabil gegen Oxidantien, da die engen Hohlraumöffnungen nicht von O-Atomen passiert werden können.

Da bei der Synthese die Templatmoleküle und die Farbmittelmoleküle um die Käfigplätze konkurrieren, wird die Konzentration der Templatmoleküle i.a. sehr niedrig gewählt. Häufig wirken die Farbmittelmoleküle auch als strukturinduzierende Template, sodaß eine nur sehr geringe Templatkonzentration oder überhaupt kein Templatzusatz mehr erforderlich ist. Der Quotient aus Templatmenge und Farbmittelmolekülzusatz beträgt vorzugsweise zwischen 0 und 0.5 und insbesondere zwischen 0 und 0.2.

Die Farbigkeit kann auch durch gezieltes Kalzinieren von mit nichtfarbigen Molekülen beladenen Kristallen erreicht werden. Durch den dirigierenden Effekt des Hohlraumsystems werden verhältnismäßig definierte Pyrolyseprodukte gebildet, die je nach Pyrolysetemperatur unterschiedliche Farben aufweisen. So konnten gelbe, rote, grüne und braune Farbtöne erzielt werden.

Die nachfolgend beschriebenen Beispiele sollen die Erfindung erläutern, ohne sie zu begrenzen.

### Beispiel 1

0.8 g pyrogene Kieselsäure der Zusammensetzung SiO₂ wurden mit 0.04 g kleingemahlenen Dodekasil 1 H-Clathrasilkristallen, welche als Impfkristalle dienten und im folgenden als SiO₂(Impfkristalle) bezeichnet werden, 0.4 g 1-Adamantylamin und 23.4 ml 32 Gew.%-igem Ammoniak bei Raumtemperatur 1 min gerührt.

Der Reaktionsansatz hatte folgende molare Zusammensetzung:
1 SiO₂ : 0.05 SiO₂(Impfkristalle) : 0.2 1-Adamantylamin : 60 H₂O: 29 NH₃
Bei einer Heizrate von 0.5 K/min und einer Endtemperatur von 453 K wurden nach 144 Stunden perfekte Dodekasil 1 H-Clathrasilkristalle mit einer mittleren Größe von 8 ± 2 µm erhalten.

### Beispiel 2

0.8 g pyrogene Kieselsäure der Zusammensetzung SiO₂ wurden mit 0.12 g kleingemahlenen Dodekasil 1 H-Clathrasilkristallen, welche als Impfkristalle dienten und im folgenden als SiO₂(Impfkristalle) bezeichnet werden, 0.4 g 1-Adamantylamin und 23.4 ml 32 Gew.%-igem Ammoniak bei Raumtemperatur 1 min gerührt.

Der Reaktionsansatz hatte folgende molare Zusammensetzung:
1 SiO₂ : 0.15 SiO₂(Impfkristalle) : 0.2 1-Adamantylamin : 60 H₂O : 29 NH₃
Bei einer Heizrate von 0.5 K/min und einer Endtemperatur von 453 K wurden nach 144 Stunden perfekte Dodekasil 1 H-Clathrasilkristalle mit einer mittleren Größe von 4 ± 1 µm erhalten.

### Beispiel 3

a) 0.8 g pyrogene Kieselsäure der Zusammensetzung SiO₂, 1.47 g 1-Adamantylamin
   und 23.4 ml 32 Gew.%-igem Ammoniak bei Raumtemperatur 1 min gerührt.
   Der Reaktionsansatz hatte folgende molare Zusammensetzung:
   1 SiO₂ : 0.73 1-Adamantylamin : 60 H₂O : 29 NH₃
   Bei einer Heizrate von 0.5 K/min und einer Endtemperatur von 453 K wurden nach 144 Stunden perfekte Dodekasil 1 H-Clathrasilkristalle erhalten, die in einer Schwingmühle kleingemahlen wurden, wobei die mittlere Partikelgröße zwischen 0.2 und 1.5 µm lag.
b) 0.8 g pyrogene Kieselsäure der Zusammensetzung SiO₂ wurden mit 0.08 g
   kleingemahlenen Dodekasil 1 H-Clathrasilkristallen aus dem Adamantylansatz nach Beispiel 3 a), welche als Impfkristalle dienten und im folgenden als SiO₂(Impfkristalle) beteichnet werden, 1.2 g Triethylammoniumbromid und 23.4 ml 32 Gew.%-igem Ammoniak bei Raumtemperatur 1 min gerührt.
   Der Reaktionsansatz hatte folgende molare Zusammensetzung:
   1 SiO₂ : 0.1 SiO₂(Impfkristalle) : 0.5 TEAMBr : 60 H₂O : 29 NH₃
   Bei einer Heizrate von 0.5 K/min und einer Endtemperatur von 453 K wurden nach 144 Stunden verwachsene Dodekasil 1 H-Clathrasilkristalle mit einer mittleren Größe zwischen 5 und 10 µm erhalten.

### Beispiel 4

0.8 g pyrogene Kieselsäure der Zusammensetzung SiO₂ wurden mit 0.08 g kleingemahlenen Dodekasil 1 H-Clathrasilkristallen (aus einem Adamantylansatz gemäß Beispiel 3 a), welche als Impfkristalle dienten und im folgenden als SiO₂(Impfkristalle) bezeichnet werden, 4 g Natriumdodecylsulfat und 23.4 ml 32 Gew.%-igem Ammoniak bei Raumtemperatur 1 min gerührt.

Der Reaktionsansatz hatte folgende molare Zusammensetzung:
1 SiO₂ : 0.1 SiO₂(Impfkristalle) : 1.0 Na-DDS : 60 H₂O : 29 NH₃
Bei einer Heizrate von 0.5 K/min und einer Endtemperatur von 453 K wurden nach 144 Stunden verwachsene Dodekasil 1 H-Clathrasilkristalle mit einer mittleren Größe zwischen 5 und 10 µm erhalten.

### Beispiel 5

0.8 g pyrogene Kieselsäure der Zusammensetzung SiO₂ wurden mit 0.08 g kleingemahlenen Dodekasil 1 H-Clathrasilkristallen (aus einem Adamantylansatz gemäß Beispiel 3 a), welche als Impfkristalle dienten und im folgenden als SiO₂(Impfkristalle) bezeichnet werden, 0.3 g 1-Adamantylamin und 23.4 ml 32 Gew.%-igem Ammoniak bei Raumtemperatur 1 min gerührt.
Der Reaktionsansatz hatte folgende molare Zusammensetzung:
1 SiO₂ : 0.1 SiO₂(Impfkristalle) : 0.4 1-Adamantylamin : 60 H₂O : 29 NH₃
Bei einer Heizrate von 0.5 K/min und einer Endtemperatur von 453 K wurden nach 144 Stunden verwachsene Dodekasil 1 H-Clathrasilkristalle mit einer mittleren Größe zwischen 5 und 10 µm erhalten.

Ein entsprechender Ansatz ohne Zusatz von Impfkristallen
1 SiO₂ : 0.4 1-Adamantylamin : 60 H₂O : 29 NH₃
führte bei einer Heizrate von 0.5 K/min und einer Endtemperatur von 453 K erst nach einer Reaktionszeit von 240 Stunden zu einem vollständigen Umsatz, wobei verwachsene Dodekasil 1 H-Clathrasilkristalle mit einer mittleren Größe zwischen 180 und 270 µm erhalten wurden.

### Beispiel 6

0.8 g pyrogene Kieselsäure der Zusammensetzung SiO₂ wurden mit 1.4 g 1-Adamantylamin und 23.4 ml 32 %igem Ammoniak bei Raumtemperatur 1 min gerührt. Der Reaktionsansatz hatte folgende molare Zusammensetzung:
1 SiO₂ x 0.7 1-Adamantylamin x 60 H₂O x 29 NH₃
Bei einer Heizrate von 0.5 K/min und einer Endtemperatur von 453K wurden nach 144 Stunden perfekte Dodecasil 1H-Clathrasilkristalle mit einer mittleren Größe von 200 µm erhalten. Die Kristalle werden mit 10K/min bis zur jeweiligen Pyrolysetemperatur für 30 min erhitzt. Die Ergebnisse sind in der folgenden Tabelle enthalten:

| Pyrolysetemperatur [K] | Farbe |
|---|---|
| 773 | farblos |
| 873 | rot |
| 1023 | grün |
| 1173 | braun |
| >1273 | schwarz |

## Patentansprüche

1. Verfahren zur Herstellung von kristallinem Clathrasil vom Strukturtyp Dodekasil 1 H mit einer mittleren Kristallgröße von nicht mehr als 20 µm, dadurch gekennzeichnet, daß ein alkalisch-wäßriges silikathaltiges Medium, enthaltend Template und Kristallisationskeime, getempert wird, wobei der auf den SiO₂-Gehalt des Mediums bezogene Gehalt an Kristallisationskeimen nicht kleiner ist als 1 Gew.%.

2. Verfahren nach Anspruch 1, dadurch gekennzeichnet, daß als Kristallisationskeime klein gemahlene Dodekasil 1 H- Clathrasilkristalle verwendet werden.

3. Verfahren nach einem der Ansprüche 1 oder 2, dadurch gekennzeichnet, daß als Template quartäre Ammoniumverbindungen, Amine, Tenside und/oder Alkohole verwendet werden.

4. Verfahren nach einem der Ansprüche 1-3, dadurch gekennzeichnet, daß das Medium zusätzlich Farbmittel enthält, die in die Clathratstruktur eingelagert werden.

5. Verfahren nach Anspruch 4, dadurch gekennzeichnet, daß das Medium organische Farbmittel enthält.

6. Verfahren nach Anspruch 5, dadurch gekennzeichnet, daß es sich bei dem organischen Farbmittel um Methylenblau, Methylorange, Bromkresolpurpur, Malachitgrün oder Phenolrot handelt.

7. Verfahren nach Anspruch 1-6, dadurch gekennzeichnet, daß das Medium einen NH₃-Gehalt von 15 bis 45 und einen H₂O-Gehalt von 40 bis 70, jeweils bezogen auf die SiO₂-Molzahl aufweist.

8. Verfahren nach Anspruch 1-7, dadurch gekennzeichnet, daß das Medium mit einer im wesentlichen linearen Helzgeschwindigkeit bis auf eine Endtemperatur aufgeheizt wird, wobei die Heizrate zwischen 0.1 und 20 K/min und die Endtemperatur zwischen 400 und 480 K betragen.

9. Plättchenförmiges, kristallines Clathrasil vom Strukturtyp Dodekasil 1 H, gekennzeichnet durch eine mittlere Kristallgröße von nicht mehr als 20 µm.

10. Plättchenförmiges Pigment auf der Basis eines Clathrasils gemäß Anspruch 9, welches eingelagerte Farbmittel enthält und ggf. zusätzlich mit einer oder mehreren Metalloxidschichten beschichtet ist.

11. Verwendung der Pigmente nach Anspruch 10 zur Pigmentierung von Kunststoffen, Lacken und Kosmetika.

## Claims

1. Process for preparing crystalline clathrasil of the dodecasil 1 H structural type having an average crystal size of not more than 20 µm, characterized in that an alkaline aqueous silicate-containing medium comprising templates and crystallization seeds is subjected to a heat treatment, the proportion of crystallization seeds, relative to the SiO₂ content of the medium, being not less than 1% by weight.

2. Process according to Claim 1, characterized in that the crystallization seeds used are finely ground clathrasil crystals of the dodecasil 1 H type.

3. Process according to one of Claims 1 or 2, characterized in that the templates used are quaternary ammonium compounds, amines, surfactants and/or alcohols.

4. Process according to one of Claims 1-3, characterized in that the medium additionally contains colorants which are incorporated in the clathrate structure.

5. Process according to Claim 4, characterized in that the medium contains organic colorants.

6. Process according to Claim 5, characterized in that the organic colorant is Methylene Blue, Methyl Orange, Bromocresol Purple, Malachite Green or Phenol Red.

7. Process according to Claims 1-6, characterized in that the medium has an NH₃ content of 15 to 45 and an H₂O content of 40 to 70, in each case relative to the number of moles of SiO₂.

8. Process according to Claims 1-7, characterized in that the medium is heated to a final temperature at a substantially linear heating rate, the heating rate being between 0.1 and 20 K/min and the final temperature being between 400 and 480 K.

9. Platelet-like crystalline clathrasil of the dodecasil 1 H structural type, characterized by an average crystal size of not more than 20 µm.

10. Platelet-like pigment based on a clathrasil according to Claim 9, having colorants incorporated therein and optionally being additionally coated with one or more metal oxide layers.

11. Use of the pigments according to Claim 10 for pigmenting plastics, lacquers and cosmetics.

## Revendications

1. Procédé pour la préparation d'un clathrasil cristallisé à structure du type dodécasil 1 H à une dimension moyenne de cristal ne dépassant pas 20 µm, caractérisé en ce que l'on chauffe un milieu aqueux alcalin contenant un silicate, des templates et des germes de cristallisation, la teneur en germes de cristallisation, rapportée à la teneur en SiO₂ du milieu, ne devant pas être inférieure à 1 % en poids.

2. Procédé selon la revendication 1, caractérisé en ce que l'on utilise en tant que germes de cristallisation des cristaux de dodécasil 1 H du clathrasil, finement broyés.

3. Procédé selon l'une des revendications 1 ou 2, caractérisé en ce que l'on utilise en tant que templates des composés d'ammonium quaternaire, des amines, des agents tensioactifs et/ou des alcools.

4. Procédé selon l'une des revendications 1 à 3, caractérisé en ce que le milieu contient en outre des colorants qui sont occlus dans la structure de clathrate.

5. Procédé selon la revendication 4, caractérisé en ce que le milieu contient des colorants organiques.

6. Procédé selon la revendication 5, caractérisé en ce que le colorant organique est le bleu de méthylène, l'orangé de méthyle, le pourpre de bromocrésol, le vert malachite ou le rouge de phénol.

7. Procédé selon les revendications 1 à 6, caractérisé en ce que le milieu est à une teneur en NH₃ de 15 à 45 et à une teneur en H₂O de 40 à 70, dans les deux cas par rapport au nombre de moles de SiO₂.

8. Procédé selon les revendications 1 à 7, caractérisé en ce que l'on chauffe le milieu à une vitesse de réchauffage essentiellement linéaire jusqu'à la température finale, cette vitesse de réchauffage étant de 0,1 à 20 K/minute et la température finale de 400 à 480 K.

9. Clathrasil cristallisé en plaquettes à structure du type dodécasil 1 H, caractérisé par une dimension de cristal moyenne ne dépassant pas 20 µm.

10. Pigment en plaquettes à base d'un clathrasil selon revendication 9, contenant du colorant à l'état occlus et le cas échéant revêtu en outre par une ou plusieurs couches d'oxydes métalliques.

11. Utilisation des pigments selon la revendication 10 pour la pigmentation de résines synthétiques, de peintures et de produits cosmétiques.
